# EUROPEAN PATENT SPECIFICATION

(11) **EP 1 368 855 B1**
(45) Date of publication and mention of the grant of the patent: **10.05.2006**
(21) Application number: 02712146.6
(22) Date of filing: 15.02.2002
(51) Int. Cl.: H01Q 1/24, H01Q 9/04, H01Q 5/00

(54) **ANTENNA ARRANGEMENT**
ANTENNENANORDNUNG
CONFIGURATION D'ANTENNE

(30) Priority: 06.03.2001 GB 0105440
(43) Date of publication of application: 10.12.2003
(73) Proprietor: Koninklijke Philips Electronics N.V., 5621 BA Eindhoven (NL)
(72) Inventor: BOYLE, Kevin, R., NL-5656 AA Eindhoven (NL)
(74) Representative: Scott, Kevin James
(86) International application number: PCT/IB2002/000473
(87) International publication number: WO 2002/071535

(56) References cited:
- EP-A- 0 892 459
- EP-A- 0 929 121
- EP-A- 0 993 070
- EP-A- 1 052 722
- EP-A- 1 113 524
- DE-A- 19 822 371
- US-A- 6 160 513
- US-B1- 6 204 819
- PATENT ABSTRACTS OF JAPAN vol. 1998, no. 12, 31 October 1998 (1998-10-31) & JP 10 190345 A (SHARP CORP), 21 July 1998 (1998-07-21)
- PATENT ABSTRACTS OF JAPAN vol. 1997, no. 04, 30 April 1997 (1997-04-30) & JP 08 321716 A (MITSUBISHI ELECTRIC CORP), 3 December 1996 (1996-12-03)
- PATENT ABSTRACTS OF JAPAN vol. 1997, no. 02, 28 February 1997 (1997-02-28) & JP 08 274535 A (MATSUSHITA ELECTRIC IND CO LTD), 18 October 1996 (1996-10-18)
- PATENT ABSTRACTS OF JAPAN vol. 016, no. 447 (E-1266), 17 September 1992 (1992-09-17) & JP 04 157908 A (ALPS ELECTRIC CO LTD), 29 May 1992 (1992-05-29)
- PATENT ABSTRACTS OF JAPAN vol. 1998, no. 13, 30 November 1998 (1998-11-30) & JP 10 224142 A (KENWOOD CORP), 21 August 1998 (1998-08-21)
- PATENT ABSTRACTS OF JAPAN vol. 2002, no. 02, 2 April 2002 (2002-04-02) & JP 2001 274619 A (NIPPON SOKEN INC;DENSO CORP), 5 October 2001 (2001-10-05)

## Description

### Technical Field

The present invention relates to an antenna arrangement comprising a substantially planar patch conductor, and to a radio communications apparatus incorporating such an arrangement.

### Background Art

Wireless terminals, such as mobile phone handsets, typically incorporate either an external antenna, such as a normal mode helix or meander line antenna, or an internal antenna, such as a Planar Inverted-F Antenna (PIFA) or similar.

Such antennas are small (relative to a wavelength) and therefore, owing to the fundamental limits of small antennas, narrowband. However, cellular radio communication systems typically have a fractional bandwidth of 10% or more. To achieve such a bandwidth from a PIFA for example requires a considerable volume, there being a direct relationship between the bandwidth of a patch antenna and its volume, but such a volume is not readily available with the current trends towards small handsets. Further, PIFAs become reactive at resonance as the patch height is increased, which is necessary to improve bandwidth.

A further problem occurs when a dual band antenna is required. In this case two resonators are required within the same structure, which means that only part of the available antenna area is used effectively at each frequency. Since the bandwidth of an antenna is related to its size, even more volume is required to provide wideband operation in two bands. An example of such an antenna is disclosed in European patent application EP 0,997,974, in which two PIFA antennas are fed from a common point and share a common shorting pin. The low frequency element is wrapped around the high frequency element, which therefore means that the high frequency element must be small compared to the total antenna size (and therefore narrow band).

Our co-pending unpublished United Kingdom patent application 0101667.4 (Applicant's reference PHGB 010009) discloses a variation on a conventional PIFA in which a slot is introduced in the PIFA between the feed pin and shorting pin. Such an arrangement provided an antenna having substantially improved impedance characteristics while requiring a smaller volume than a conventional PIFA.

EP-A-0 929 121 discloses a patch antenna comprising a planar conductor shaped to fit in the housing of a cellular telephone. The conductor comprises a generally rectangular central portion having two integrally formed wire tabs extending from approximately diametric points and terminating in juxtaposed input feeds, one of which is grounded. The wire tabs are separated from the central portion by respective gaps. Coarse tuning is achieved by extending the length of one of the gaps and fine tuning is achieved by altering the dimensions of the wire tabs. The specification also discloses a dual frequency embodiment in which the planar conductor has an elongate slot.

Patent Abstracts of Japan JP 10-190345 discloses a PIFA comprising a rectangular radiation conductor mounted parallel to but spaced from a ground conductor. One edge of the radiation conductor is bent down towards the ground plane. A grounding connection is attached to one corner of the radiation conductor remote from the bent-down edge. First and second feed conductors comprising patches disposed adjacent to but spaced from the bent-down edge. The capacities between first and second feed conductors and the bent-down edge are different. Feed lines connected to the first and second feed conductors are connected to a switching device which is operable to switch the resonant frequencies of the PIFA.

Patent Abstracts of Japan JP 08-321716 relates to an antenna for use in a radio system having different transmission and reception time slots. The electrical length of a common antenna is selected depending on whether a transmission or a reception time slot is selected.

EP-A-0 993 070 discloses a PIFA comprising a planar conductor spaced by a fixed dielectric from a ground plane. First, second and third terminals are attached to one end of the planar conductor. The first terminal is permanently attached to a RF stage. The second terminal is connected to a change-over switch one pole of which is connected directly to ground and the other pole of which is connected to ground by way of an inductor. The third terminal is connected to ground by way of an on-off switch. By operating the change-over switch and the on-off switch the PIFA can be made to operate in several frequency bands or over a wide frequency band.

Patent Abstracts of Japan JP 08 274 535 discloses a PIFA for operating at low frequencies, for example 400 MHz. The PIFA comprises a rectangular conductive plate superposed over, and spaced from, a ground plane. A grounding connector connects one edge of the conductive plate to the ground plane. Another edge, which with the one edge forms a corner of the conductive plate, has a feed connector connected to it. An L-shaped grid-slit is provided in the conductive plate between the feed connector and the corner. An impedance match is obtained by adjusting the distance between the feed and grounding connectors, that is, by altering the length of the grid-slit.

Patent Abstracts of Japan JP 04-157908 discloses a PIFA comprising a rectangular planar conductor having an L-shaped slot opening into one of the narrower edges. The slot comprises a first section opening into the edge of the planar conductor and a second orthogonally arranged section having a blind end. Three aligned grounding conductors are disposed on one side of the second section and a feed conductor is arranged on the opposite side of the second section. The impedance of the PIFA is matched by adjusting the distance between the grounding point and the feed point, that is, by altering the length of the second section of the slot.

### Disclosure of Invention

An object of the present invention is to provide an improved planar antenna arrangement.

According to a first aspect of the present invention there is provided an antenna arrangement comprising a ground plane, a substantially planar patch conductor of rectilinear shape mounted spaced from, and co-extensive with, the ground plane, a slot in the planar patch conductor, the slot opening into one edge of the planar patch conductor and being positioned asymmetrically of the patch conductor, first and second connection points on the planar patch conductor, the first and second connection points being disposed on the perimeter of the planar patch conductor and being arranged one on each side of the slot, and an RF signal stage connected to the first connection point, characterised in that a third connection point is provided on the perimeter of the planar patch conductor at a location on the opposite side of the first connection point to the slot, in that at least one first switch means is connected to the second connection point, and in that at least one second switch means is connected to the third connection point, whereby the antenna arrangement is operated in a first mode by the first switch means being open causing the second connection point to be open circuit and the second switch means being closed to connect the third connection point to ground and in a second mode in which the first switch means and the second switch means are respectively closed and opened so that the second connection point is connected to ground and the third connection point is open circuit.

By varying the impedances connected to the connection points, the current fed into the antenna may follow different routes, thereby providing different modes of operation. The modes may have different resonant frequencies and/or different impedances. The impedances may include short and open circuits, which may be provided by switches or passive circuits. Further connection points may be provided, and the radio circuitry may comprise a distributed diplexer. All of these arrangements have the advantage of enabling a reduced antenna volume compared to a PIFA of equivalent volume by making full use of the patch conductor in all modes.

According to a second aspect of the present invention there is provided a radio communications apparatus including an antenna arrangement made in accordance with the present invention.

The present invention is based upon the recognition, not present in the prior art, that by enabling the impedances connected to points on the patch conductor of a PIFA to be varied, dual-band and multi-band antennas making full use of the patch area in all bands are enabled.

### Brief Description of Drawings

Embodiments of the present invention will now be described, by way of example, with reference to the accompanying drawings, wherein:
Figure 1 is a perspective view of a PIFA mounted on a handset;
Figure 2 is a perspective view of a slotted planar antenna mounted on a handset;
Figure 3 is a graph of simulated return loss S₁₁ in dB against frequency f in MHz for the antenna of Figure 2, with the first pin fed and the second pin grounded;
Figure 4 is a Smith chart showing the simulated impedance of the antenna of Figure 2 over the frequency range 800 to 3000MHz, with the first pin fed and the second pin grounded;
Figure 5 is a graph of simulated return loss S₁₁ in dB against frequency f in MHz for the antenna of Figure 2, with the second pin fed and the first pin grounded;
Figure 6 is a Smith chart showing the simulated impedance of the antenna of Figure 2 over the frequency range 800 to 3000MHz, with the second pin fed and the first pin grounded;
Figure 7 is a graph of simulated return loss S₁₁ in dB against frequency f in MHz for the antenna of Figure 2, with the first pin fed and the second pin open circuit;
Figure 8 is a Smith chart showing the simulated impedance of the antenna of Figure 2 over the frequency range 800 to 3000MHz, with the first pin fed and the second pin open circuit;
Figure 9 is a graph of simulated return loss S₁₁ in dB against frequency f in MHz for the antenna of Figure 2, with the second pin fed and the first pin open circuit;
Figure 10 is a Smith chart showing the simulated impedance of the antenna of Figure 2 over the frequency range 800 to 3000MHz, with the second pin fed and the first pin open circuit; and
Figure 11 to 15 are plan views of further embodiments of the present invention.

In the drawings the same reference numerals have been used to indicate corresponding features.

### Modes for Carrying Out the Invention

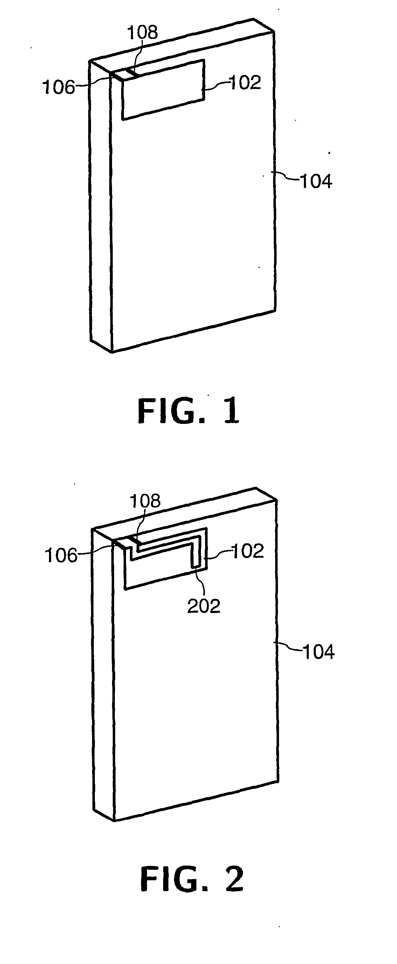

A perspective view of a PIFA mounted on a handset is shown in Figure 1. The PIFA comprises a rectangular patch conductor 102 supported parallel to a ground plane 104 forming part of the handset. The antenna is fed via a feed pin 106, and connected to the ground plane 104 by a shorting pin 108.

In a typical example embodiment of a PIFA the patch conductor 102 has dimensions 20×10mm and is located 8mm above the ground plane 104 which measures 40×100×1mm. The feed pin 106 is located at a corner of both the patch conductor 102 and ground plane 104, and the shorting pin 108 is separated from the feed pin 106 by 3mm.

It is well known that the impedance of a PIFA is inductive. One explanation for this is provided by considering the currents on the feed and shorting pins 106,108 as the sum of differential mode (equal and oppositely directed, non-radiating) and common mode (equally directed, radiating) currents. For the differential mode currents, the feed and shorting pins 106,108 form a short-circuit transmission line, which has an inductive reactance because of its very short length relative to a wavelength (8mm, or 0.05λ at 2GHz, in the embodiment shown in Figure 1).

Figure 2 is a perspective view of a variation on the standard PIFA, disclosed in our co-pending unpublished United Kingdom patent application GB0101667.4 (Applicant's reference PHGB 010009), in which a slot 202 is provided in the patch conductor 102 between the feed pin 106 and shorting pin 108. The presence of the slot affects the differential mode impedance of the antenna arrangement by increasing the length of the short circuit transmission line formed by the feed pin 106 and shorting pin 108, which enables the inductive component of the impedance of the antenna to be significantly reduced. This is because the slot 202 greatly increases the length of the short-circuit transmission line formed by the feed and shorting pins 106,108, thereby enabling the impedance of the transmission line to be made less inductive. This arrangement is therefore known as a Differentially Slotted PIFA (DS-PIFA).

It was also shown in the above-referenced patent application that the presence of the slot provides an impedance transformation. This is because the DS-PIFA can be considered to be similar to a very short, heavily top-loaded folded monopole. The impedance transformation is by a factor of approximately four if the slot 202 is centrally located in the patch conductor 102. An asymmetrical arrangement of the slot 202 on the patch conductor 102 can be used to adjust this impedance transformation, enabling the resistive impedance of the antenna to be adjusted for better matching to a 50Ω circuit.

In a first embodiment of the present invention, the shorting pin 108 is not connected directly to the ground plane 104. Instead, an input signal to the antenna may be fed to either of the pins 106,108, with the other pin either being left open circuit or being connected directly to the ground plane 104. Hence, the pins will now be referred to as a first pin 106 and a second pin 108. As mentioned above, the patch conductor 102 has dimensions 20×10mm and is located 8mm above the ground plane 104. The slot 202 is 1mm wide, starts centrally between the two pins 106,108, then runs parallel to the edge of the patch conductor 102 and 0.5mm from its edge.

The return loss S₁₁ of this embodiment (without matching) was simulated using the High Frequency Structure Simulator (HFSS), available from Ansoft Corporation, for a number of feeding arrangements. In each case, the results are shown as a graph of the magnitude of S₁₁ for frequencies f between 800 and 3000MHz and as a Smith chart illustrating the simulated impedance of the arrangement over the same frequency range.

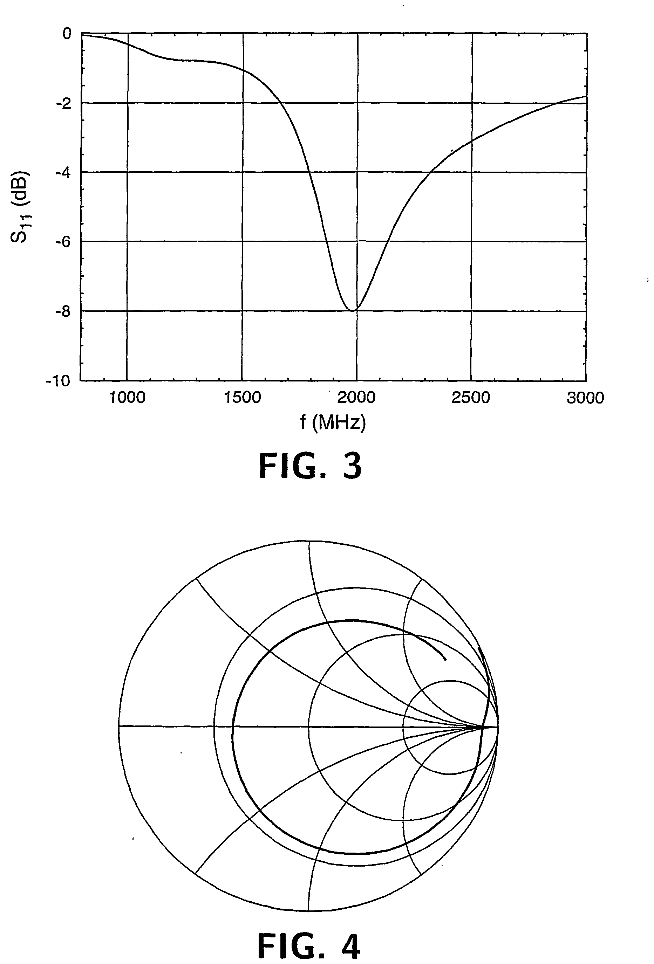

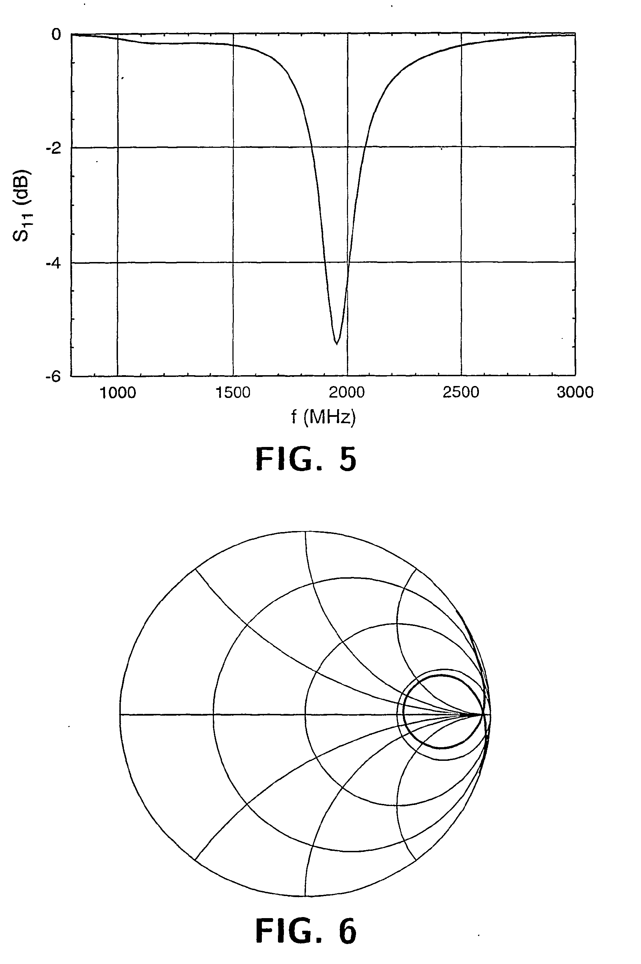

In a first arrangement of this embodiment, the first pin 106 is fed while the second pin 108 is shorted to the ground plane 104, with simulation results shown in Figures 3 and 4. In a second arrangement, the second pin 108 is fed while the first pin 106 is shorted to the ground plane 104, with simulation results shown in Figures 5 and 6. In both of these arrangements, the antenna behaves as a DS-PIFA in the same way as disclosed in GB0101667.4, and is resonant at a high frequency. The impedance presented depends on which side of the slot 202 is fed. When the first pin 106 is fed the common mode transformation ratio is low and a low impedance is presented, while when the second pin 108 is fed the common mode transformation ratio is high and a high impedance is presented. This can clearly be seen from comparison of the Smith charts in Figures 4 and 6 respectively.

One way in which the first and second arrangements could be used is disclosed in our co-pending unpublished United Kingdom patent application GB0025709.7 (Applicant's reference PHGB000145) in which a transceiver comprises a transmitter coupled to the first pin 106 and a receiver coupled to the second pin 108 (or vice versa). Such an embodiment can be used in a time division radio system, with circuitry arranged to couple the first pin 106 to the ground plane 104 while the transceiver is receiving and to couple the second pin 108 to the ground plane 104 while the transceiver is transmitting. By suitable positioning of the slot 202, the receiver can be fed by a low impedance while the transmitter can feed a high impedance, improving operation of the transceiver.

Further embodiments could be based on the inclusion of additional features, as disclosed in our co-pending unpublished United Kingdom patent application GB0030741.3 (Applicant's reference PHGB000176), for example the addition of discrete components to the antenna structure.

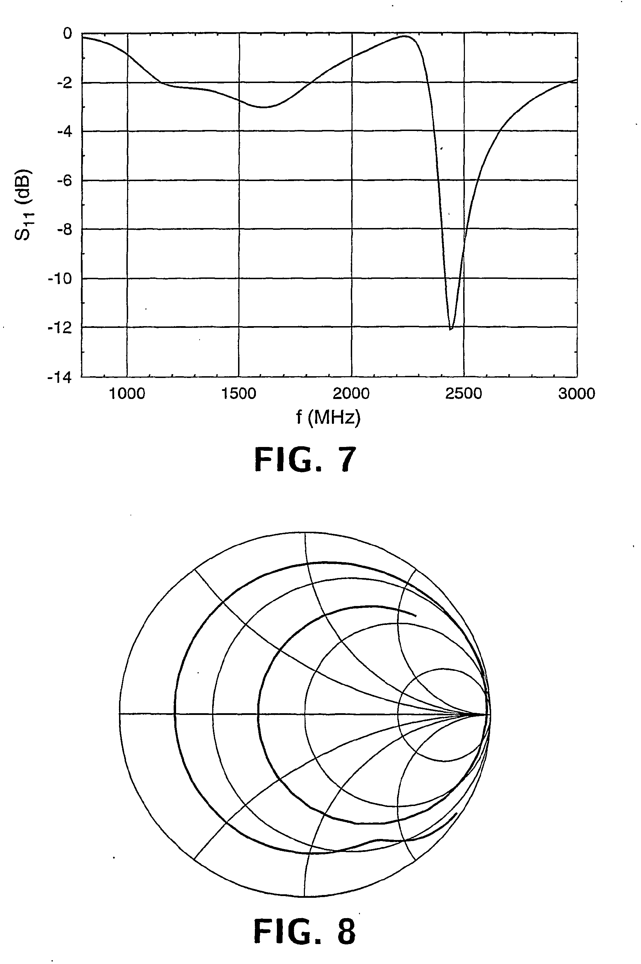

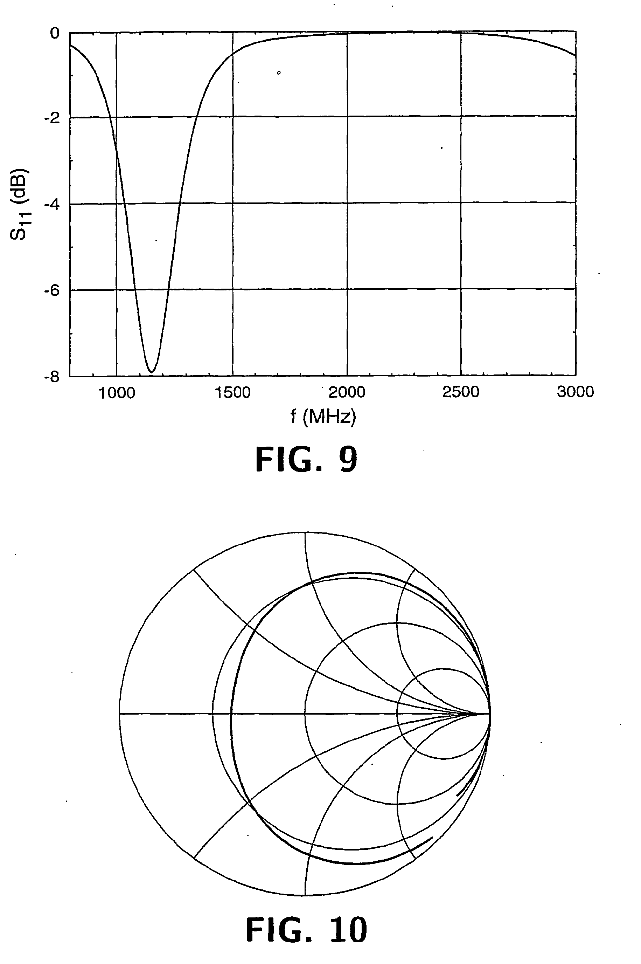

In a third arrangement of the present invention, the first pin 106 is fed and the second pin 108 is left open circuit, with simulation results shown in Figures 7 and 8. In a fourth arrangement of the present invention, the second pin 108 is fed and the first pin 106 is left open circuit, with simulation results shown in Figures 9 and 10.

It is shown in our co-pending unpublished United Kingdom patent application GB 0105441.0 (Applicant's reference PHGB010033), that a Planar Inverted-L Antenna (PILA) together with an external matching circuit can provide equivalent performance to a dual-band or multi-band PIFA from a reduced antenna volume. This is because the shorting pin in a conventional PIFA performs a matching function, but this match is only effective at one frequency and is at the expense of the match at other frequencies.

The third and fourth arrangements operate as a meandered PILA, since the open circuit pin has little effect. In the third arrangement, where the first pin 106 is fed, the resonant frequency is increased because the narrow section of the patch conductor 102, above and to the right of the slot 202, has little effect because of its small area. In the fourth arrangement, the resonant frequency is reduced because the narrow section of the patch conductor 102 carries current to the wider section, and therefore the full meandered length is resonant.

The simulations described above demonstrate that it is possible to operate a planar antenna in both DS-PIFA and meandered PILA modes. A meandered PIFA could also be used instead of a meandered PILA, as in some of the subsequent embodiments. A range of embodiments of the present invention, all suitable for use as a dual band GSM/DCS antenna, will now be presented to illustrate its practical application.

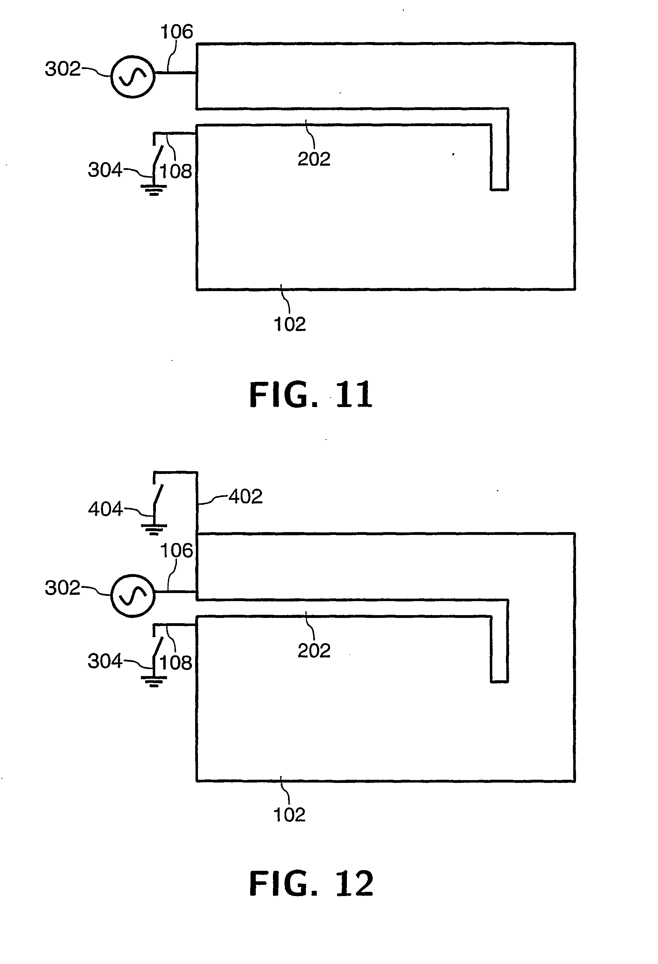

Figure 11 is a plan view of a second embodiment of the present invention. In both bands a RF signal source 302 is fed to the patch conductor 102 via the first pin 106. The second pin 108 is connected to a switch 304. In the low frequency (GSM) mode the switch 304 is open and the antenna operates as a meandered PILA. In the high frequency (DCS) mode the switch 304 is closed, connecting the second pin 108 to the ground plane 104, and the antenna operates as a DS-PIFA. In both modes, all of the antenna structure is used (in contrast to dual-band PIFAs such as that disclosed in EP 0,997,974) and therefore increased bandwidths can be produced. This is particularly beneficial for the high frequency band, and will be even more so for UMTS antennas, which need to operate at a higher frequency and over a wider bandwidth.

Figure 12 is a plan view of a third embodiment of the present invention. In both bands a RF signal source 302 is fed to the patch conductor 102 via the first pin 106. The second pin 108 is connected to a first switch 304, and a third pin 402 is provided, connected to a second switch 404. In the low frequency (GSM) mode the first switch 304 is open, the second switch 404 is closed, connecting the third pin 402 to the ground plane 104, and the antenna operates as a meandered PIFA. In the high frequency (DCS) mode the switches 304,404 are reversed, connecting the second pin 108 to the ground plane 104, and the antenna operates as a DS-PIFA.

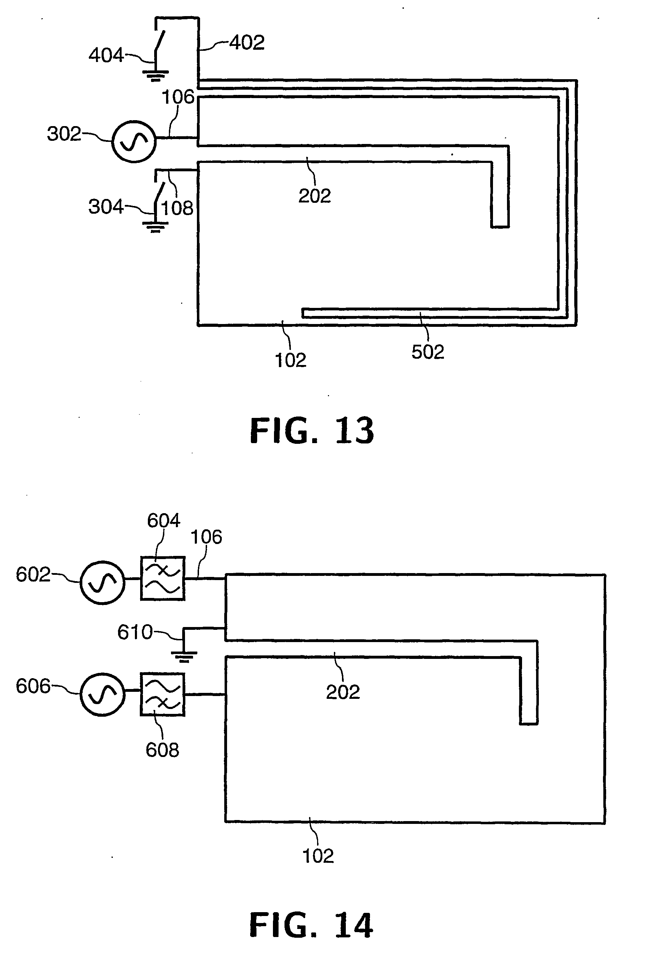

Figure 13 is a plan view of a fourth embodiment of the present invention. This is the same as the third embodiment with the addition of a further slot 502 close to the edge of the patch conductor 102. The settings of the switches for the modes are the same as for the third embodiment. The presence of the further slot 502 enables the low frequency mode to operate as a DS-PIFA, with a consequent improvement in its match. The high frequency mode is not significantly affected by the further slot 502 owing to its location close to the perimeter of the patch conductor 102.

In all of the above embodiments where switches are used, the same effect could be obtained by other means. For example, passive equivalents such as tuned circuits may be used. In addition, some or all of the pins not being fed could be reactively loaded instead of being short or open circuited.

Figure 14 is a plan view of a fifth embodiment of the present invention, which requires no switching components by distributing a diplexer between two antenna feeds. In the low frequency (GSM) mode, a GSM signal source 602 is passed by a low-pass filter 604 and fed to the patch conductor 102 via the first pin 106. In the high frequency (DCS) mode, a DCS signal source 606 is passed by a high-pass filter 608 and fed to the patch conductor via the second pin 108. A grounding pin 610 is also provided, connecting the patch conductor 102 and ground plane 104. In operation, in the low frequency mode the high-pass filter 608 presents a high impedance to GSM signals and the antenna operates as a meandered PIFA. In the high frequency mode the low-pass filter 604 presents a high impedance to DCS signals and the antenna operates as a DS-PIFA. This embodiment has the additional advantage that the antenna provides additional isolation between the GSM and DCS ports.

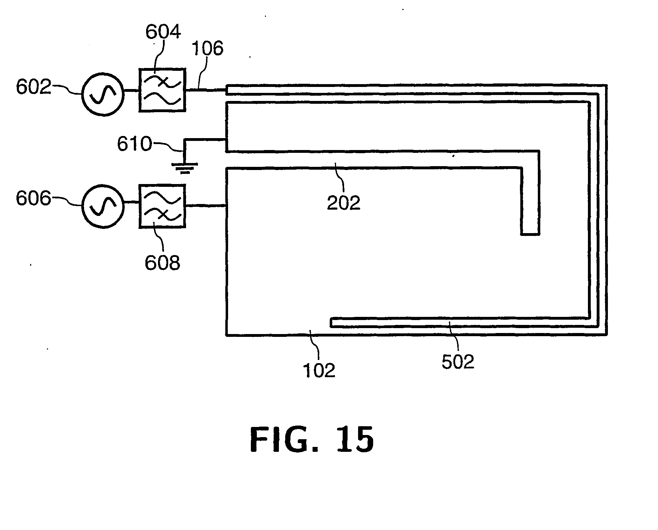

Figure 15 is a plan view of a sixth embodiment of the present invention. This is the same as the fifth embodiment with the addition of a further slot 502 close to the edge of the patch conductor 102. This modifies the low frequency mode to operate as a DS-PIFA, providing improved impedance characteristics.

From reading the present disclosure, other modifications will be apparent to persons skilled in the art. Such modifications may involve other features which are already known in the design, manufacture and use of antenna arrangements and component parts thereof, and which may be used instead of or in addition to features already described herein.

In the present specification and claims the word "a" or "an" preceding an element does not exclude the presence of a plurality of such elements. Further, the word "comprising" does not exclude the presence of other elements or steps than those listed.

## Claims

1. An antenna arrangement comprising a ground plane (104), a substantially planar, patch conductor (102) of rectilinear shape mounted spaced from, and co-extensive with, the ground plane, a slot (202) in the planar patch conductor, the slot opening into one edge of the planar patch conductor and being positioned asymmetrically of the patch conductor, first and second connection points (106, 108) on the planar patch conductor, the first and second connection points being disposed on the perimeter of the planar patch conductor and being arranged one on each side of the slot, and an RF signal stage (302) connected to the first connection point (106), **characterised in that** a third connection point (402) is provided on the perimeter of the planar patch conductor at a location on the opposite side of the first connection point (106) to the slot (202), **in that** at least one first switch means (304) is connected to the second connection point (108), and **in that** at least one second switch means (404) is connected to the third connection point (402), whereby the antenna arrangement is operated in a first mode by the first switch means (304) being open causing the second connection point (108) to be open circuit and the second switch means (404) being closed to connect the third connection point (402) to ground and in a second mode in which the first switch means (304) and the second switch means (404) are respectively closed and opened so that the second connection point (108) is connected to ground and the third connection point (402) is open circuit.

2. An arrangement as claimed in claim 1, **characterised in that** the planar patch conductor comprises a smaller section and a larger section separated by the asymmetrically positioned slot (202) and **in that** first (106) and third (402) connection points are on the smaller section and the second connection point (108) is on the larger section.

3. An arrangement as claimed in claim 1 or 2, **characterised by** another, asymmetrically positioned, slot (502) in the planar patch conductor (102), in that the another slot (502) opens into the one edge of the planar patch conductor, and in that the first and third connection points (106, 402) are arranged one on each side of the another slot.

4. A radio communications apparatus including an antenna arrangement as claimed in any one of claims 1 to 3.

## Patentansprüche

1. Antennenanordnung, umfassend eine Masseebene (104), ein rechteckiges weitgehend planares Patch-Element (102), das in einem Abstand von der Masseebene und in gleicher Richtung verlaufend zu dieser montiert ist, einen Schlitz (202) in dem planaren Patch-Element, wobei der Schlitz zu einer Kante des planaren Patch-Elements hin geöffnet und asymmetrisch bezüglich des Patch-Elements angeordnet ist, einen ersten und einen zweiten Verbindungspunkt (106, 108) auf dem planaren Patch-Element, die am Umfang des planaren Patch-Elements angeordnet sind und von denen sich auf jeder Seite des Schlitzes einer befindet, sowie eine HF-Signalstufe (302), die mit dem ersten Verbindungspunkt (106) verbunden ist, **dadurch gekennzeichnet, dass** am Umfang des planaren Patch-Elements auf der dem Schlitz (202) gegenüberliegenden Seite des ersten Verbindungspunkts (106) ein dritter Verbindungspunkt (402) vorhanden ist, dass mindestens ein erstes Schaltmittel (304) mit dem zweiten Verbindungspunkt (108) verbunden ist und dass mindestens ein zweites Schaltmittel (404) mit dem dritten Verbindungspunkt (402) verbunden ist, wobei die Antennenanordnung in einer ersten Betriebsart betrieben wird, wenn das erste Schaltmittel (304) geöffnet und **dadurch** der zweite Verbindungspunkt unverbunden ist und das zweite Schaltmittel (404) geschlossen und **dadurch** der dritte Verbindungspunkt (402) mit Masse verbunden ist, und in einer zweiten Betriebsart betrieben wird, bei der das erste Schaltmittel (304) geschlossen und das zweite Schaltmittel (404) geöffnet ist, sodass der zweite Verbindungspunkt (108) mit Masse verbunden ist und der dritte Verbindungspunkt (402) unverbunden ist.

2. Anordnung nach Anspruch 1, **dadurch gekennzeichnet, dass** das planare Patch-Element einen kleineren und einen größeren Abschnitt umfasst, die durch den asymmetrisch angeordneten Schlitz (202) getrennt sind, und dass sich der erste (106) und der dritte (402) Verbindungspunkt auf dem kleineren Abschnitt befinden und sich der zweite Verbindungspunkt (108) auf dem größeren Abschnitt befindet.

3. Anordnung nach Anspruch 1 oder 2, **gekennzeichnet durch** einen weiteren asymmetrisch angeordneten Schlitz (502) in dem planaren Patch-Element und **dadurch**, dass sich der weitere Schlitz (502) zu der einen Kante des planaren Patch-Elements hin öffnet und dass der erste und dritte Verbindungspunkt (106, 402) jeweils auf verschiedenen Seiten des weiteren Schlitzes angeordnet sind.

4. Funkkommunikationsgerät, umfassend eine Antennenanordnung nach einem der Ansprüche 1 bis 3.

## Revendications

1. Montage d'antenne comprenant un plan de masse (104), un conducteur patch (102) sensiblement plan de forme rectiligne monté à l'écart du plan de masse, et s'étendant conjointement à celui-ci, une fente (202) dans le conducteur patch plan, la fente s'ouvrant dans un bord du conducteur patch plan et étant placée de manière asymétrique par rapport au conducteur patch, des premier et deuxième points de connexion (106, 108) sur le conducteur patch plan, les premier et deuxième points de connexion étant disposés sur le périmètre du conducteur patch plan et étant agencés chacun d'un côté de la fente, et un étage de signaux à haute fréquence (302) connecté au premier point de connexion (106), **caractérisé en ce qu'**un troisième point de connexion (402) est prévu sur le périmètre du conducteur patch plan en un endroit sur le côté opposé du premier point de connexion (106) à la fente (202), **en ce qu'**au moins un premier moyen de commutation (304) est connecté au deuxième point de connexion (108), et **en ce qu'**au moins un deuxième moyen de commutation (404) est connecté au troisième point de connexion (402), de sorte que le montage d'antenne est activé dans un premier mode par l'ouverture du premier moyen de commutation (304) amenant le deuxième point de connexion (108) à être en circuit ouvert et la fermeture du deuxième moyen de commutation (404) pour mettre le troisième point de connexion (402) à la masse et dans un deuxième mode dans lequel le premier moyen de commutation (304) et le deuxième moyen de commutation (404) sont respectivement fermé et ouvert de sorte que le deuxième point de connexion (108) est mis à la masse et le troisième point de connexion (402) est en circuit ouvert.

2. Montage suivant la revendication 1, **caractérisé en ce que** le conducteur patch plan comprend une section plus petite et une section plus grande séparées par la fente (202) placée de manière asymétrique et **en ce que** le premier (106) et le troisième (402) points de connexion se trouvent sur la section plus petite et **en ce que** le deuxième point de connexion (108) se trouve sur la section plus grande.

3. Montage suivant la revendication 1 ou 2, **caractérisé par** une autre fente (502), placée de manière asymétrique, dans le conducteur patch plan (102), en ce que l'autre fente (502) s'ouvre dans le premier bord du conducteur patch plan, et en ce que les premier et troisième points de connexion (106, 402) sont disposés chacun d'un côté de l'autre fente.

4. Appareil de radiocommunication incluant un montage d'antenne suivant l'une quelconque des revendications 1 à 3.
